# EUROPEAN PATENT SPECIFICATION

(11) **EP 4 071 347 B1**
(45) Date of publication and mention of the grant of the patent: **07.01.2026**
(21) Application number: 20895437.0
(22) Date of filing: 12.11.2020
(51) Int. Cl.: F03B 17/00, F03B 13/00, F03B 5/00, F03B 17/06

(54) **SYSTEM FOR GENERATING ELECTRICAL ENERGY FROM THE ENERGY OF A WATER CURRENT**
SYSTEM ZUM ERZEUGEN VON ELEKTRISCHER ENERGIE AUS DER ENERGIE EINES WASSERSTROMS
SYSTÈME DE GÉNÉRATION D'ÉNERGIE ÉLECTRIQUE À PARTIR DE L'ÉNERGIE D'UN COURANT D'EAU

(30) Priority: 05.12.2019 ES 201931088
(43) Date of publication of application: 12.10.2022
(73) Proprietor: Perez Fernandez, Celso, 24401 Ponferrada (León) (ES)
(72) Inventor: Perez Fernandez, Celso, 24401 Ponferrada (León) (ES)
(74) Representative: González López-Menchero, Álvaro Luis
(86) International application number: PCT/ES2020/070702
(87) International publication number: WO 2021/111018

(56) References cited:
- DE-A1- 102012 017 265
- DE-A1- 102012 017 265
- ES-A1- 2 302 652
- ES-A1- 2 302 652
- US-A- 4 583 368
- US-A- 4 583 368
- US-A1- 2018 023 541
- US-B1- 6 945 042
- US-B1- 6 945 042

## Description

### OBJECT OF THE INVENTION

The object of the present invention, as the title of the invention states, is a system for generating electrical energy from the energy of a water current by means of a hydraulic wreck, which allows the transformation of the kinetic energy of a water current in movement, as well as the transformation of the potential energy of the very weight of the water into kinetic energy of a transformer assembly for its transformation into electrical energy.

The present invention therefore falls within the field of equipment for transforming kinetic and potential energy into electrical energy, and in particular those that use the energy of water currents.

### BACKGROUND OF THE INVENTION

Currently, hydraulic systems for producing energy are based on the movement of turbines by the force of water in large waterfalls, or on steam at high temperatures and pressures, also in the movement of turbines, like in different thermal power stations.

In the state of the art is known the document US 2018/023541 A1, which discloses a system for collecting energy from a moving mass.

Systems for harnessing tidal energy by turbining on site are also known; however, the known systems that harness the energy of water currents in rivers and canals without any additional construction such as dams and the like are scarce and have reduced energy production, where the flora and fauna of the watercourses are also affected.

Therefore, the object of the present invention is to overcome the drawbacks of energy production systems based on the use of water currents, both in their kinetic and potential energy, since they require the construction of complex structures, as well as affect the ecosystem, by developing a hydraulic wreck such as the one described below, which is essentially described in the first claim.

### DESCRIPTION OF THE INVENTION

This system for producing electrical energy makes use of the moving water of rivers, canals, seas or any other form of water movement.

The improvement comprising the invention is characterised in that it is powered only by moving water from rivers, canals, seas or others, without the use of exhaustible raw materials or environmental pollutants.

Another improvement is that as its entire structure is submerged and its operation is not aggressive, noisy or affecting the landscape, not only does it have zero degrees of pollution, but it is also favourable and serves as a wreck, as its title indicates, to protect all fish fauna. The raw material will always be there, unless the water does not flow, due to extreme droughts or catastrophes, which will always be local and coincidental.

The system for generating electrical energy from the energy of a water current comprises means for transforming the energy of a water current into hydraulic energy connected to means for transforming the hydraulic energy into kinetic energy and the latter into electrical energy.

The means for transforming the energy of a water current into hydraulic energy can be carried out in two different ways.

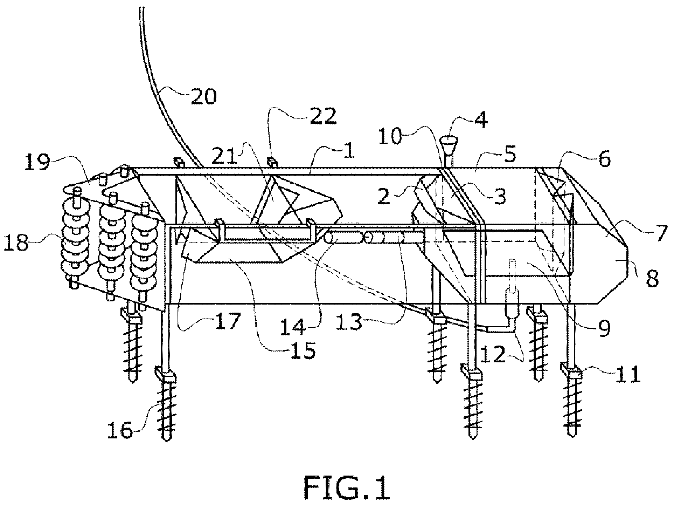

A first embodiment (Figure 1), representing the present invention, comprising a structure anchored to the ground on which the barge moves in a continuous forward and backward movement so that it contacts a tank that is filled and emptied by the barge, said tank having a horizontally movable piston and a plate or tray that performs a lifting and lowering movement inside the tank alternately with the forward and backward movement of the piston, so that when the plate or tray descends into the lower chamber under the tank, a hydraulic cylinder placed under the tank is activated and this is what transmits the hydraulic energy to the means for transforming the hydraulic energy into kinetic energy and the latter into electrical energy.

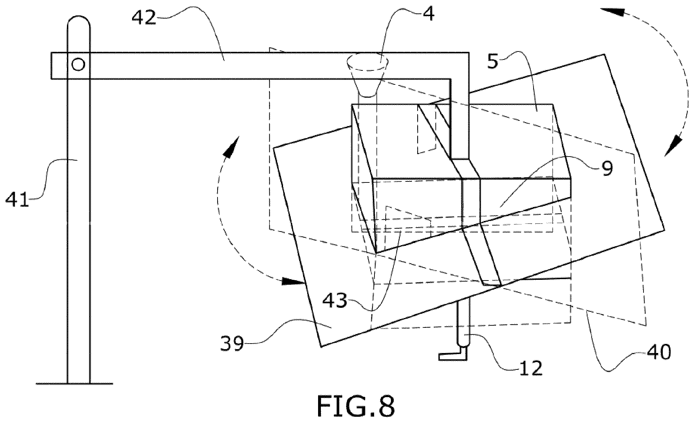

In a second embodiment (figure 8), which does not form part of the present invention, the means for transforming the energy of a water current into hydraulic energy also comprise a tank in combination with a plate or tray that has a lifting and lowering movement, with said tank having an associated swinging flap that causes the tank to sink and rise, and in this process, as in the previous case, each time the plate or tray lowers, the air contained in the chamber defined under the plate or tray freely escapes to the outside through the chimney. At that moment, the tray loaded with the weight of the water serves to activate the hydraulic cylinder connected to the bottom of the tank, transmitting the hydraulic energy to the means for transforming the hydraulic energy into kinetic energy and the latter into electrical or mechanical energy.

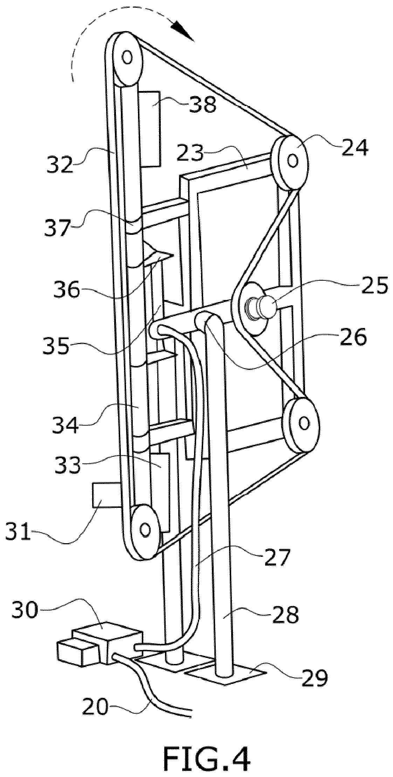

The means for transforming hydraulic energy into electrical energy (figure 4) comprises a structure anchored to the ground on which a swinging structure is mounted and on this a pole that can be moved by the action of a hydraulic cylinder that receives the hydraulic energy from the means for transforming the energy of a water current, in such a way that by acting on the hydraulic cylinder the movable pole is moved and this produces the swinging of the swinging structure, on which a closed chain is mounted and to which a weight is attached. Each time the swinging structure rotates, the weight is placed in a higher position and, due to the action of gravity, said weight falls, thus starting the generation of electrical energy by transforming the potential energy of the weight into the kinetic energy of rotation and this, in turn, into electrical energy.

Our recommended case involves using the great potential of the force of the weight of water that is produced on a tray or plate when it is filled with water at the top, inside a tank, where this force or work is carried out. At the end of the cycle, the water is emptied so that the next cycle can be carried out again.

The emptying of the tank (figure 1), as the entire flow is in movement, is carried out with the force of the barge that moves at the same speed as the water flow, mounted for this function, pushing the water from the inside towards the flow of the river and starting a new cycle, having to position the gates open to avoid friction with the water in its backward movement and return to its initial position. This emptying can also be carried out through pipes of a suitable diameter buried laterally or through the centre and bottom of the flow until the difference in level is reached, due to its weight metres below.

Unless otherwise stated, all technical and scientific elements used herein have the meaning usually understood by a person skilled in the art to which this invention pertains. In the practice of the present invention, processes and materials similar or equivalent to those described herein may be used.

Throughout the description and the claims, the word "comprises" and its variants are not intended to exclude other technical features, additives, components or steps. For those skilled in the art, other objects, advantages and features of the invention will be apparent in part from the description and in part from the practice of the invention.

### EXPLANATION OF THE FIGURES

To complement the description being made and to help make the features of the invention more readily understandable, in accordance with a preferred practical exemplary embodiment thereof, a set of drawings is attached hereto as an integral part of said description, in which the following is depicted in an illustrative and nonlimiting manner.
Figure 1 depicts the structural platform assembly of the hydraulic wreck in a front elevation view.
Figures 2A and 2B show figure 1 in two different sequences pertaining to the tray (9) and the piston (10) and different positions of the trays and the piston.
Figure 3 shows an exploded view of the set of parts that make up the structure in figure 1, allowing a better understanding of its shape and fit within the assembly.
Figure 4 represents the assembly for transforming potential energy from figures 1 or 8 into kinetic energy to be controlled and easily transformable.
Figures 5A and 5B show the two positions that the swinging structure of the assembly for transforming potential energy can take.

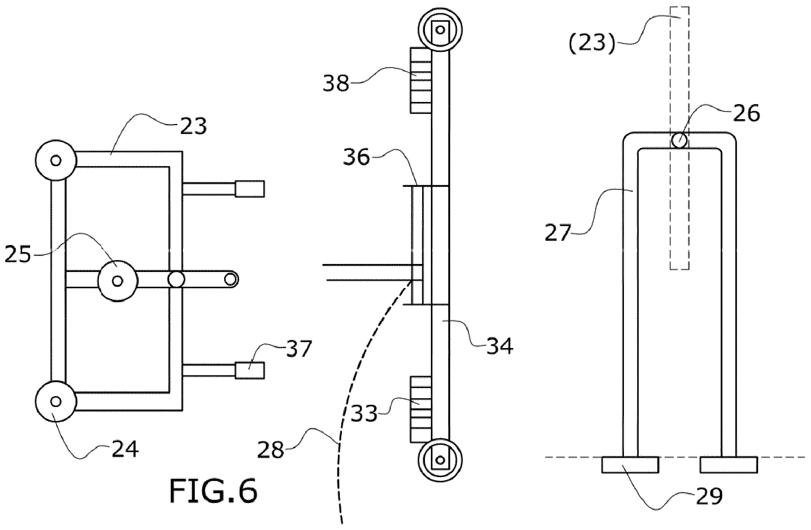

Figure 6 is an exploded representation of the main parts of that make up the assembly for transforming energy in figure 4.

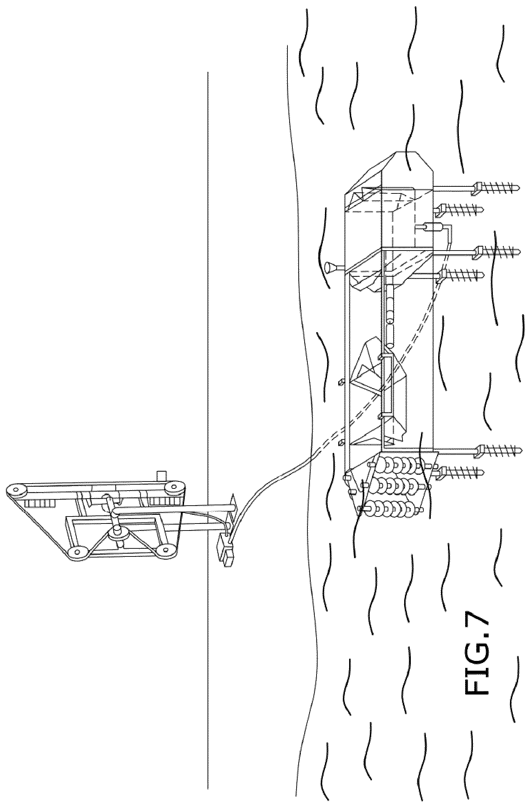

Figure 7 represents the combination of the first embodiment for transforming the energy of a water current into hydraulic energy together with a transformation assembly.
Figure 8, which does not form part of the present invention, shows a front view of the second embodiment for transforming the energy of a water current into hydraulic energy.

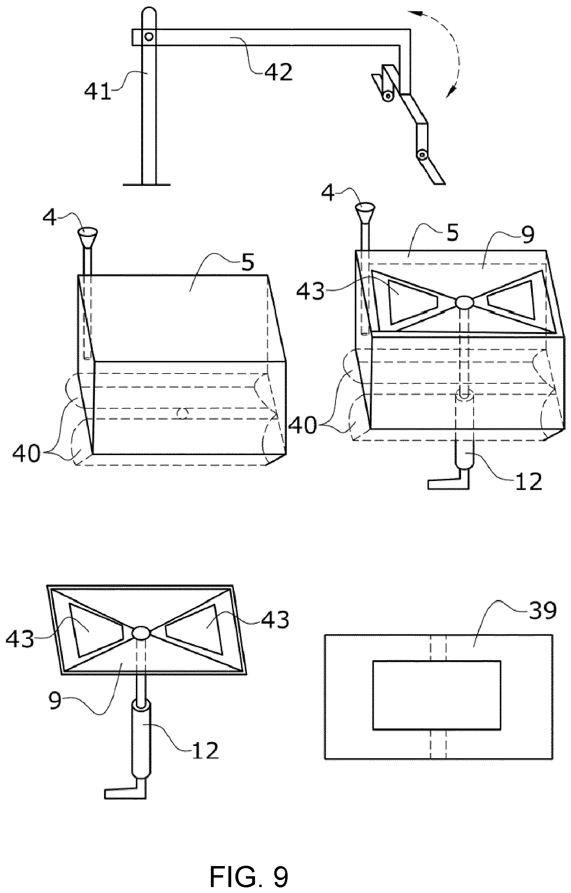

Figure 9 shows the set of parts of the second embodiment shown in figure 8.

### PREFERRED EMBODIMENT OF THE INVENTION

In view of the figures, a preferred embodiment of the proposed invention is described below.

Figure 1 shows a first embodiment of the means for transforming the energy of a water current into hydraulic energy, comprising a rectangular structure (1) formed by guides along which a barge (15) runs by means of wheels (22) in a continuous forward and backward movement from an upstream end to a downstream end where a tank (5) is located.

The rectangular structure (1) is anchored to the ground by means of foundation posts (11) or augers (16).

In the front part of the structure (1) there is a set of rollers (19) formed by rotating wheels (18) that prevent branches or other objects that could be carried by the current from coming into contact with the barge (15) and the tank (5).

The barge (15) has front gates (17) and rear gates (21) that are duly synchronised in their opening and closing and are operated by means of micromotors. Both the front gates (17) and the rear gates (21) are in a closed position forming a block during the advance of the barge (15), while during the return to the original position they open and remain in a parallel position to avoid friction with the water current.

The tank (5) is housed inside a casing or cover (8) and the front part of the tank (5) has an external gate (2) that allows water to pass into the tank through its upper part and an internal gate (3), which allows water to enter the inside of the tank (5). Also, the rear part of the tank (5) has some gates (6) for the closing and exit of the water through an outlet opening (7). This outlet opening (7) is hermetically coupled with semi-underground pipes for emptying the water under its own weight when it reaches the difference in level metres below, mainly on slopes.

Inside the tank (5) there is a piston (10) that performs a horizontal movement, as well as a lifting and lowering tray or plate (9) where the forward and backward movements of the piston (10) alternate with the lifting and lowering movement of the tray or plate (9).

In the upper part of the tank (5) there is a pipe or chimney (4) for air inlet and outlet to avoid the formation of a vacuum inside the tank (5), while in the lower part of the tank (5) there is a hydraulic cylinder (12) that transmits the pressure through the hydraulic pipe (20). This hydraulic cylinder (12) has a piston associated with the tray or plate (9).

When the barge (15) is in its previous position, the front gates (17) and rear gates (21) are closed and it starts to move along the guides until it contacts a stop (14), which is connected to a rod (13) and this rod (13) to the piston (10) so that it starts to move forward, causing the outlet gates (6) to open and the water to exit the tank and the air to enter through the chimney (4) to avoid the formation of a vacuum inside the tank. The air circulates through valves inside the tank until it is expelled, then the gates (6) close and the piston (10) starts a backward movement to its origin, at which point the tray or plate (9) begins to rise to its highest point, at which point the gate (2) opens and water begins to enter the tank (5) and the tray or plate (9) begins to lower and the hydraulic cylinder (12) begins to transmit hydraulic pressure.

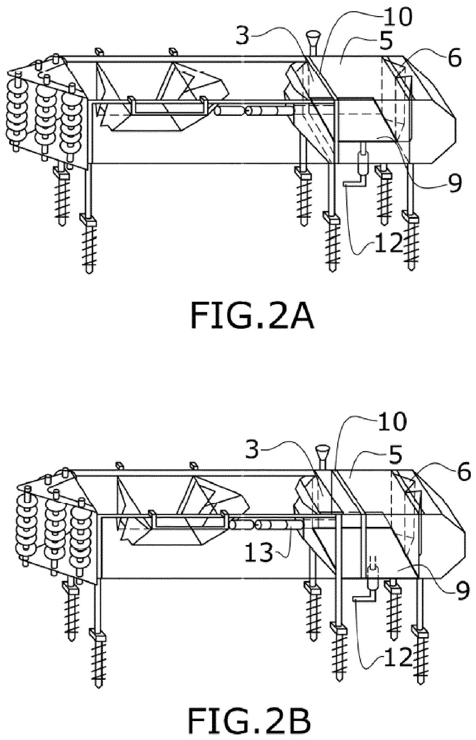

Figure 2A shows the different positions of the tray (9) and the piston (10). In figure 2A the tray is raised and the piston (10) is retracted and in figure 2B the tray (9) is in its lower position and the piston (10) is in a forward position.

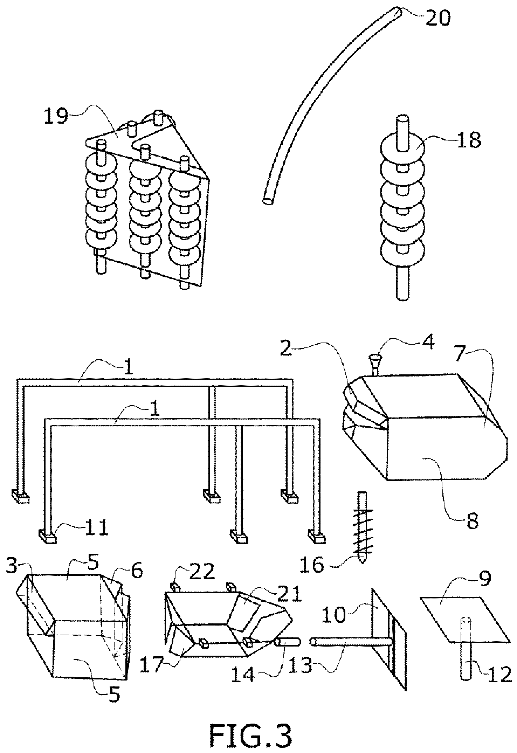

Figure 3 shows all the above parts exploded in order to better understand their construction details.

Figure 4 shows the electricity generating assembly consisting of a swinging structure (23) anchored to the ground by means of columns or pillars (27) anchored to the ground by means of a foundation base (29). This swinging structure (23) has a mast or pole (34) that can be moved by means of bushings or clamps (34) mounted on the swinging structure (23) and said pole (34) can be moved by means of a hydraulic cylinder (35), the swinging structure (23) having fixed stops (36) that limit the displacement of the movable pole (29). On the other hand, the mast or movable pole (34) has a series of counterweights (33) and (38) placed at the ends of the movable pole (34).

The counterweights (33) and (38) are necessary to achieve the balance of the pole (34). Although there is a loss in the displacement of the counterweights, the displacement of the balance point, which is reached by means of the hydraulic cylinder (35) attached to the pole, is considerably reduced.

The swinging structure (23) rotates 180° in one direction and in the opposite direction with respect to an axis (26). This swinging structure (23) has a series of sprockets (24) on which a chain (32) runs and to which a weight (31) is attached which, when lowered, produces the rotation of a sprocket (25) fitted with pulleys to transmit the rotation to a generator.

The hydraulic energy required to drive the hydraulic cylinder (35) comes from a pipe or hose (28) which in turn is connected to a hydraulic pump (30) to which the hydraulic pipe (20) is connected.

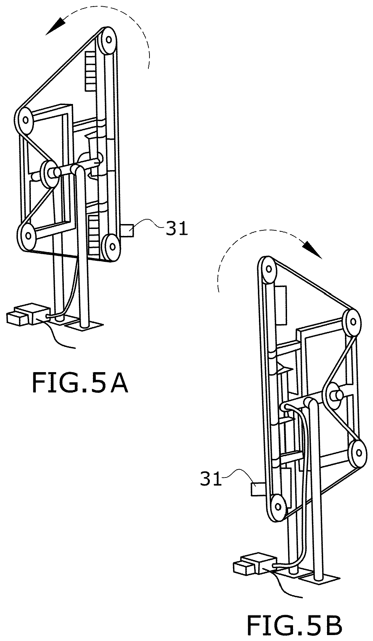

Figures 5A and 5B show the two positions that the swinging structure (23) can adopt and that each time it rotates the weight (31) is lowered from its highest position to the lower position and during this displacement the movement of the chain is transformed into a rotation of the sprocket (25) so that by means of pulleys it transmits the rotation to a generator.

Figure 8 shows the second embodiment of the means used to transform the kinetic energy of a water current and the potential energy of the weight of the water into hydraulic energy, consisting of a tank (5) with gates (40) in its lower part, wherein inside the tank (5) there is the plate or tray (9) with a lifting and lowering movement. The tank is linked to a swinging flap (39), where this flap (39) has a central opening in which the tank (5) is housed in an articulated manner.

The flap assembly (39) and the tank (5) which is connected to a beam (42) that is hingedly connected to a support post (41) so as to allow the lifting and lowering of the tank (5) and flap (39) assembly.

In a first position, when the tank (5) together with the flap are at their highest level, the current contacts the rear end (39) of the flap, causing it to swing, which causes its front end to sink and therefore the tank (5), starting the entry of water into the tank (5), which in this case is open at the top. The entry of water causes the plate or tray (9) to lower and the air contained in the part below the plate or tray (9) exits through the chimney (4). When the plate or tray (9) is lowered, the hydraulic cylinder (12) is charged and, by means of the hydraulic pipe (20), transmits this energy to the hydraulic cylinder (35) in such a way that the swinging structure (23) swings, leaving the weight (31) in its upper part and ready to start lowering.

The nature of the present invention having been sufficiently described, as well as the manner of putting it into practice, it should be noted that, within its essential nature, it may be put into practice in other embodiments which differ in detail from the one indicated by way of example, and to which the protection claimed will also apply, provided that it does not alter, change or modify its fundamental principle.

## Claims

1. A system for generating electrical energy from the energy of a water current, **characterised in that** the means for transforming the energy of a water current into hydraulic energy comprise a rectangular structure (1) formed by guides along which a barge (15) runs by means of wheels (22) along which it can move in a continuous forward and backward movement from an upstream end to a downstream end where a tank (5) is located, wherein the barge (15) has front gates (17) and other rear gates (21) that are duly synchronised in their opening and closing and are operated by means of micromotors; furthermore, the front part of the tank (5) has an external gate (2) that allows water to pass into the tank through its upper part and an internal gate (3) which, when opened, allows water to enter the tank (5); also, the rear part of the tank (5) has some gates (6) for the closing and exit of the water through an outlet opening (7); on the other hand, inside the tank (5) there is a piston (10) that performs a horizontal movement, as well as a lifting and lowering tray or plate (9) where the forward and backward movements of the piston (10) alternate with the lifting and lowering movement of the tray or plate (9), wherein the piston (10) has to undergo a backward movement after its forward movement and in the upper part of the tank (5) there is a pipe or chimney (4) for air inlet and outlet to avoid the formation of a vacuum inside the tank (5), while in the lower part of the tank (5) there is a hydraulic cylinder (12) that transmits the pressure through a hydraulic pipe (20) connected to means for transforming the hydraulic energy into kinetic energy and this into electrical energy, which comprise a swinging structure (23) which comprises a mast or pole (34) and a series of sprockets (24) on which a chain (32) runs and to which a weight (31) is attached, wherein the mast or pole (34) can be moved by means of a hydraulic cylinder (35) in such a way that the swinging structure (23) swings, leaving the weight (31) in its upper part and ready to start lowering.

2. The system for generating electrical energy from the energy of a water current according to claim 1, **characterised in that** the rectangular structure (1) is anchored to the ground by means of foundation posts (11) or augers (16).

3. The system for generating electrical energy from the energy of a water current according to claim 1, **characterised in that** in the front part of the structure (1) there is a set of rollers (19) formed by rotating wheels (18) that prevent branches or other objects that could be carried by the current from coming into contact with the barge (15) and the tank (5).

4. The system for generating electrical energy from the energy of a water current according to any of claims 1 to 3, **characterised in that** it comprises means for transforming the energy of a water current into hydraulic energy, connected to means for transforming hydraulic energy into kinetic energy and the latter into electrical energy, wherein the means for transforming the hydraulic energy into kinetic energy and this into electrical energy comprise the swinging structure (23) anchored to the ground by means of columns or pillars (27) anchored to the ground by means of a foundation base (29), wherein this swinging structure (23) has the mast or pole (34) that can be moved by means of bushings or clamps (34) mounted on the swinging structure (23) and said pole (34) can be moved by means of the hydraulic cylinder (35), the swinging structure (23) has fixed stops (36) that limit the displacement of the movable pole (34); on the other hand, the mast or movable pole (34) has a series of counterweights (33) and (38) placed at the ends of the movable pole (34), wherein the swinging structure (23) rotates 180° in one direction and in the opposite direction with respect to an axis (26) and has the series of sprockets (24) on which a chain (32) runs and to which a weight (31) is attached which, when lowered, produces the rotation of a sprocket (25) fitted with pulleys to transmit the rotation to a generator, wherein the hydraulic energy required to drive the hydraulic cylinder (35) comes from a pipe or hose (28) which in turn is connected to a hydraulic pump (30) to which a hydraulic pipe (20) is connected.

## Patentansprüche

1. System zum Erzeugen elektrischer Energie aus der Energie eines Wasserstroms, **dadurch gekennzeichnet, dass** die Mittel zum Umwandeln der Energie eines Wasserstroms in hydraulische Energie eine rechteckige Struktur (1) umfassen, die durch Führungen gebildet wird, entlang derer ein Kahn (15) mittels Rädern (22) läuft, entlang derer er sich in einer kontinuierlichen Vorwärts- und Rückwärtsbewegung von einem stromaufwärtigen Ende zu einem stromabwärtigen Ende bewegen kann, wo ein Tank (5) angeordnet ist, wobei der Kahn (15) vordere Tore (17) und andere hintere Tore (21) aufweist, die in ihrem Öffnen und Schließen sachgemäß synchronisiert sind und mittels Mikromotoren betrieben werden; wobei ferner der vordere Teil des Tanks (5) ein äußeres Tor (2), das den Eintritt von Wasser in den Tank durch seinen oberen Teil ermöglicht, und ein inneres Tor (3) aufweist, das, wenn es geöffnet ist, den Eintritt von Wasser in den Tank (5) ermöglicht; wobei auch der hintere Teil des Tanks (5) einige Tore (6) für das Schließen und den Austritt des Wassers durch eine Auslassöffnung (7) aufweist; wobei andererseits innerhalb des Tanks (5) ein Kolben (10) vorhanden ist, der eine horizontale Bewegung durchführt, sowie eine hebende und senkende Schale oder Platte (9), wobei die Vorwärts- und Rückwärtsbewegungen des Kolbens (10) sich mit der Hebe- und Senkbewegung der Schale oder Platte (9) abwechseln, wobei der Kolben (10) nach seiner Vorwärtsbewegung eine Rückwärtsbewegung durchlaufen muss, und im oberen Teil des Tanks (5) ein Rohr oder Kamin (4) für den Lufteinlass und -auslass vorhanden ist, um die Bildung eines Vakuums innerhalb des Tanks (5) zu vermeiden, während sich im unteren Teil des Tanks (5) ein Hydraulikzylinder (12) befindet, der den Druck durch eine Hydraulikleitung (20) überträgt, die mit Mitteln zur Umwandlung der hydraulischen Energie in kinetische Energie und diese in elektrische Energie verbunden ist, die eine schwingende Struktur (23) umfassen, die einen Mast oder Pfosten (34) und eine Reihe von Kettenrädern (24) umfasst, auf denen eine Kette (32) läuft und an denen ein Gewicht (31) befestigt ist, wobei der Mast oder Pfosten (34) mittels eines Hydraulikzylinders (35) so bewegt werden kann, dass die schwingende Struktur (23) schwingt und das Gewicht (31) in seinem oberen Teil und zum Absenken bereit belässt.

2. System zum Erzeugen elektrischer Energie aus der Energie eines Wasserstroms nach Anspruch 1, **dadurch gekennzeichnet, dass** die rechteckige Struktur (1) mittels Fundamentpfosten (11) oder Schnecken (16) im Boden verankert ist.

3. System zum Erzeugen elektrischer Energie aus der Energie eines Wasserstroms nach Anspruch 1, **dadurch gekennzeichnet, dass** im vorderen Teil der Struktur (1) ein Satz von Rollen (19) vorhanden ist, die von rotierenden Rädern (18) gebildet werden, die verhindern, dass Äste oder andere Gegenstände, die von dem Strom mitgerissen werden könnten, mit dem Kahn (15) und dem Tank (5) in Kontakt kommen.

4. System zum Erzeugen elektrischer Energie aus der Energie eines Wasserstroms nach einem der Ansprüche 1 bis 3, **dadurch gekennzeichnet, dass** es Mittel zur Umwandlung der Energie eines Wasserstroms in hydraulische Energie umfasst, die mit Mitteln zur Umwandlung der hydraulischen Energie in kinetische Energie und letztere in elektrische Energie verbunden sind, wobei die Mittel zur Umwandlung der hydraulischen Energie in kinetische Energie und diese in elektrische Energie die schwingende Struktur (23) umfassen, die mittels Säulen oder Pfeilern (27) im Boden verankert ist, die mittels eines Fundamentsockels (29) im Boden verankert sind, wobei diese schwingende Struktur (23) den Mast oder Pfosten (34) aufweist, der mittels an der schwingenden Struktur (23) montierter Buchsen oder Klemmen (34) bewegt werden kann, und der Pfosten (34) mittels des Hydraulikzylinders (35) bewegt werden kann, wobei die schwingende Struktur (23) fixierte Anschläge (36) aufweist, die die Verschiebung des beweglichen Pfostens (34) begrenzen; wobei andererseits der Mast oder der bewegliche Pfosten (34) eine Reihe von Gegengewichten (33) und (38) aufweist, die an den Enden des beweglichen Pfostens (34) platziert sind, wobei die schwenkbare Struktur (23) sich um 180° in einer Richtung und in der entgegengesetzten Richtung in Bezug auf eine Achse (26) dreht und eine Reihe von Kettenrädern (24) aufweist, auf denen eine Kette (32) läuft und an denen ein Gewicht (31) befestigt ist, das, wenn es abgesenkt wird, die Drehung eines mit Riemenscheiben versehenen Kettenrads (25) bewirkt, um die Drehung auf einen Generator zu übertragen, wobei die für den Antrieb des Hydraulikzylinders (35) erforderliche hydraulische Energie von einer Leitung oder einem Schlauch (28) kommt, die bzw. der wiederum mit einer Hydraulikpumpe (30) verbunden ist, an die eine Hydraulikleitung (20) angeschlossen ist.

## Revendications

1. Système de génération d'énergie électrique à partir de l'énergie d'un courant d'eau, **caractérisé en ce que** les moyens pour la transformation de l'énergie d'un courant d'eau en énergie hydraulique comprennent une structure rectangulaire (1) formée par des guides le long desquels une barge (15) s'étend au moyen de roues (22) le long desquelles elle peut se déplacer dans un mouvement continu vers l'avant et vers l'arrière d'une extrémité amont à une extrémité aval où un réservoir (5) est situé, dans lequel la barge (15) a des portes avant (17) et d'autres portes arrière (21) qui sont dûment synchronisées dans leur ouverture et fermeture et qui sont opérées au moyen de micromoteurs ; en outre, la partie avant du réservoir (5) a une porte extérieure (2) qui permet à l'eau de passer dans le réservoir à travers sa partie supérieure et une porte intérieure (3) qui, lorsqu'elle est ouverte, permet à l'eau d'entrer dans le réservoir (5) ; également, la partie arrière du réservoir (5) a certaines portes (6) pour la fermeture et la sortie de l'eau à travers une ouverture d'échappement (7) ; d'autre part, à l'intérieur du réservoir (5) se trouve un piston (10) qui réalise un mouvement horizontal, ainsi qu'un plateau ou une plaque de levage et d'abaissement (9) où les mouvements vers l'avant et vers l'arrière du piston (10) alternent avec les mouvements de levage et d'abaissement du plateau ou de la plaque (9), dans lequel le piston (10) doit subir un mouvement vers l'arrière après son mouvement vers l'avant et dans la partie supérieure du réservoir (5) se trouve un tuyau ou une cheminée (4) pour l'admission et l'échappement d'air pour éviter la formation d'un vide à l'intérieur du réservoir (5), tandis que dans la partie inférieure du réservoir (5) se trouve un vérin hydraulique (12) qui transmet la pression à travers un tuyau hydraulique (20) relié à des moyens pour la transformation de l'énergie hydraulique en énergie cinétique et de celle-ci en énergie électrique, qui comprennent une structure oscillante (23) qui comprend un mât ou poteau (34) et une série de pignons (24) sur lesquels une chaîne (32) s'étend et à laquelle un poids (31) est fixé, dans lequel le mât ou poteau (34) peut être entraîné en mouvement au moyen d'un vérin hydraulique (35) de manière telle que la structure oscillante (23) oscille, laissant le poids (31) dans sa partie supérieure et prêt à commencer l'abaissement.

2. Système de génération d'énergie électrique à partir de l'énergie d'un courant d'eau selon la revendication 1, **caractérisé en ce que** la structure rectangulaire (1) est ancrée au sol au moyen de piquets de fondation (11) ou de tarières (16).

3. Système de génération d'énergie électrique à partir de l'énergie d'un courant d'eau selon la revendication 1, **caractérisé en ce que** dans la partie avant de la structure (1) se trouve un ensemble de rouleaux (19) formés par des roues rotatives (18) qui empêchent des branches ou autres objets qui pourraient être entraînés par le courant d'entrer en contact avec la barge (15) et le réservoir (5).

4. Système de génération d'énergie électrique à partir de l'énergie d'un courant d'eau selon l'une quelconque des revendications 1 à 3, **caractérisé en ce qu'**il comprend des moyens pour la transformation de l'énergie d'un courant d'eau en énergie hydraulique, reliés à des moyens pour la transformation de l'énergie hydraulique en énergie cinétique et de cette dernière en énergie électrique, dans lequel les moyens pour la transformation de l'énergie hydraulique en énergie cinétique et de celle-ci en énergie électrique comprennent la structure oscillante (23) ancrée au sol au moyen de colonnes ou de piliers (27) ancrés au sol au moyen d'une base de fondation (29), dans lequel cette structure oscillante (23) a le mât ou poteau (34) qui peut être entraîné en mouvement au moyen de bagues ou de pinces (34) montées sur la structure oscillante (23) et ledit poteau (34) peut être entraîné en mouvement au moyen d'un vérin hydraulique (35), la structure oscillante (23) a des butées fixes (36) qui limitent le déplacement du poteau mobile (34) ; d'autre part, le mât ou poteau mobile (34) a une série de contrepoids (33) et (38) placés au niveau des extrémités du poteau mobile (34), dans lequel la structure oscillante (23) effectue une rotation de 180 ° dans un sens et dans le sens opposé par rapport à un axe (26) et a la série de pignons (24) sur lesquels une chaîne (32) s'étend et à laquelle un poids (31) est fixé qui, lorsqu'il est abaissé, produit la rotation d'un pignon (25) équipé de poulies pour transmettre la rotation à un générateur, dans lequel l'énergie hydraulique requise pour entraîner le vérin hydraulique (35) provient d'un tuyau ou flexible (28) qui est à son tour relié à une pompe hydraulique (30) à laquelle un tuyau hydraulique (20) est relié.
